# FASCICULE DE BREVET EUROPEEN

(11) **EP 0 438 331 B1**
(45) Date de publication et mention de la délivrance du brevet: **11.08.1993**
(21) Numéro de dépôt: 91400046.8
(22) Date de dépôt: 11.01.1991
(51) Int. Cl.: C02F 1/28, C02F 1/42

(54) **Utilisaton de cellulose greffée pour l'épuration des eaux**
Verwendung von Pfropfcellulosen für Wasserreinigung
Use of graft cellulose for water purification

(30) Priorité: 15.01.1990 FR 9000760
(43) Date de publication de la demande: 24.07.1991
(73) Titulaire: INSTITUT TEXTILE DE FRANCE, 92223 Bagneux Cédex (FR)
(72) Inventeur: Mazet, Michel, F-87000 Limoges (FR); Rigaudie, Isabelle, F-12850 Onet Le Chateau (FR); Wattiez, Daniel, F-69380 Lissieu (FR); Chatelin, Roger, F-69380 Lissieu (FR); Combes, Jean-François, F-69001 Lyon (FR); Gavet, Louis, F-69005 Lyon (FR)
(74) Mandataire: Hénnion, Jean-Claude

(56) Documents cités:
- EP-A- 0 054 778
- FR-A- 2 197 823
- US-A- 4 178 438
- US-A- 4 627 920
- PATENT ABSTRACTS OF JAPAN, vol. 8, no. 232 (C-248), 25 octobre 1984; & JP-A-59 112 888 (TORAY) 29-06-1984
- PATENT ABSTRACTS OF JAPAN, vol. 6, no. 143 (C-221), 3 août 1982; & JP-A-57 067 634 (SUMITOMO CHEM. CO.) 24-04-1982
- THE COMMITTEE ON CHEMICAL UTILIZATION OF COAL, DIVISION OF CHEMISTRY AND CHEMICAL TECHNOLOGY, NATIONAL RESEARCH COUNCIL: "Chemistry of coal utilization", vol. 1, 1945, John Wiley & Sons, New York, US

## Description

La présente invention concerne l'épuration des eaux naturelles, notamment des eaux stagnantes, et industrielles; elle concerne plus particulièrement l'élimination des substances humiques et éventuellement des nitrates, qui sont contenus dans ces eaux.

On sait que la présence des substances humiques et des nitrates contenus en particulier dans les eaux naturelles, notamment stagnantes, en interdit la consommation directe. En effet les substances humiques développent des odeurs désagréables et ont un potentiel cancérigène. Ces substances humiques sont des produits de la décomposition de déchets végétaux ou animaux; ils se présentent sous la forme de polymères à motifs polyaromatiques, de masse molaire élevée (supérieure à 200.000 pour les humines, comprise entre 2.000 et 150.000 pour les acides humiques, inférieure à 2.000 pour les acides fulviques). Ils sont généralement associés à des nitrates dont les risques toxicologiques sont bien connus.

On a cherché par différentes voies à éliminer des eaux naturelles les substances humiques et les nitrates, en particulier pour les rendre potables.

Parmi les voies possibles, la technique reposant sur l'échange d'ions n'a pas abouti, malgré la présence dans la structure des substances humiques de fonctions carboxyliques. En effet dans le domaine de l'échange d'ions il est bien connu que ces substances sont des poisons pour les résines, c'est-à-dire qu'elles se fixent très rapidement en surface de la résine et que, du fait de leur masse molaire élevée, les molécules fixées superficiellement empêchent la diffusion d'autres molécules dans la partie interne de la résine.

Des essais réalisés par le demandeur, il ressort que, par rapport à la capacité totale d'échange des résines le rendement effectif d'échange vis-à-vis des substances humiques n'est que de l'ordre de trois pour cent. Ces essais ont été réalisés avec cinq types différents de résines, qui ont donné des résultats très proches, à savoir de 9 à 11 mg de substances humiques retenus par gramme de résine pour 300mg potentiellement fixables compte-tenu de la capacité des résines.

Un autre inconvénient a été constaté. Les substances humiques fixées en surface des résines ne sont pas extractibles et les résines ne sont donc pas régénérables. Ceci serait dû à des phénomènes d'adsorption irréversibles des substances humiques par les résines se produisant en plus de l'échange d'ions proprement dit.

Or on a trouvé et c'est ce qui fait l'objet de l'invention que les celluloses greffées, sous forme fibreuse, à fonction ammonium quaternaire étaient utilisables pour l'élimination des substances humiques et les nitrates contenus dans les eaux naturelles et industrielles, dans d'excellentes conditions de rendement et de régénération.

De manière inattendue, le rendement d'échange avec cette présentation particulière d'échangeur d'ions est égal voire supérieur à 75%. De plus les celluloses greffées après fixation de substances humiques ont été régénérées sans difficultés avec une solution de chlorure de sodium et sans que le rendement d'échange dans l'utilisation ultérieure ne s'en trouve diminué.

On peut essayer d'expliquer ce résultat par la combinaison d'une part de la forme fibreuse qui présente une très grande surface spécifique et d'autre part de la forme greffée de la cellulose. En présence d'eau, les greffons auraient une certaine mobilité par rapport au squelette cellulosique, rendant beaucoup plus accessibles les fonctions ammonium quaternaire et ceci de manière réversible, malgré la masse molaire élevée des substances humiques.

Il était déjà connu par le document US.A.4,178,438 de modifier de la cellulose en sorte qu'elle comporte des fonctions échangeuses d'ions, et par le document US.A.4,627,920 de réaliser un support solide échangeur d'ions, pouvant prendre des formes diverses, résine, poudres ou fibres. Certes parmi tous les exemples cités dans ces deux documents, il est indiqué que le groupement échangeur d'ions peut être à fonction ammonium quaternaire. Certes dans le document US.A.4,627,920 il est aussi indiqué que le support peut être, entre autres, un papier échangeur d'ions obtenu par greffage.

Cependant aucun de ces documents ne concerne l'élimination de substances ayant une structure du type de celle des substances humiques, à savoir des polymères à motifs aromatiques, de masse molaire élevée et comportant des fonctions carboxyliques. Et rien dans ces documents ne conduit l'homme du métier, qui est confronté au problème d'élimination des substances humiques et qui connaît les mauvais résultats obtenus avec les résines échangeuses d'ions, à faire parmi la multiplicité de solutions possibles le choix précis de l'invention, qui combine les trois éléments: forme fibreuse, cellulose greffée et fonctions ammonium quaternaire.

La cellulose greffée selon l'invention peut se présenter sous différentes formes, selon le matériel mis en oeuvre, par exemple papier, non-tissé, bourre, fil, tissu.

De préférence la cellulose greffée à fonction ammonium quaternaire est obtenue par greffage radicalaire de la cellulose à l'aide d'un monomère insaturé à fonction ammonium quaternaire. Parmi les monomères adaptés, on retient le méthacrylate de diéthyl-amino-éthyl quaternisé, méthacrylate de diméthyl amino éthyl quaternisé, forme chlorure, dénommé pleximon 735 ou TMAE MC 80 par la société Röhm, ou le triméthyl ammonium propyl méthacrylamide forme chlorure dénommé MAPTAC.

Avantageusement la capacité d'échange de la cellulose greffée à fonction ammonium quaternaire est au moins de 0,2 méq/g et de préférence 0,4 méq/g.

L'utilisation de la cellulose greffée, sous forme fibreuse, comportant des fonctions ammonium quaternaire, aptes à éliminer les substances humiques et les nitrates, est particulièrement adaptée à la production d'eau potable à partir des eaux naturelles contenant lesdites substances humiques et nitrates.

L'invention sera mieux comprise, et d'autres avantages et caractéristiques apparaîtront à la lecture de la description qui va être faite d'un exemple de réalisation et d'utilisation d'une cellulose greffée à fonctions ammonium quaternaire pour l'élimination des substances humiques et des nitrates des eaux naturelles en contenant.

On a réalisé le greffage d'une cellulose se présentant sous la forme d'un non-tissé type feutre viscose de 250g/m² en 0,90m de large par imprégnation/foulardage en continu et en ligne, passage sous faisceau d'électrons et lavage, dans les conditions suivantes. Le bain d'imprégnation était une solution à 30% de PLEXIMON, réalisée à partir d'une solution mère à 80%. Au foulardage, le taux d'emport était de 180%. Le passage à 4m/mn sous le faisceau d'électrons à 350kw d'énergie et 3,5mA d'intensité a conduit à une dose de 13kGy (1,3MRad). Le lavage a été réalisé en continu à l'eau déminéralisée, jusqu'à atteindre une résistivité de l'eau extraite du non-tissé de 10 µS. L'ensemble des opérations de greffage s'est déroulé à la température ambiante.

La cellulose greffée obtenue est une cellulose échangeuse d'anions à fonctions ammonium quaternaire, dont la capacité d'échange est de 0,3 méq/g.

Dans un premier temps on a procédé à des essais comparatifs en statique entre la cellulose greffée ci-dessus et différents types de résines échangeuses d'anions, à savoir A161,A162,D1,MSA1 et MSA2.

Pour ces essais on a artificiellement pollué une eau en lui ajoutant 2g/l de substances humiques et 1g/l de nitrates, qui sont des concentrations de 10 à 40 supérieures à celles rencontrées dans des eaux naturelles stagnantes.

Puis on a dispersé dans un volume de cette eau polluée, sous légère agitation, une quantité déterminée d'un échangeur d'ions.

On constate qu'un équilibre est atteint après un certain temps de contact, c'est-à-dire que les concentrations respectives en substances humiques et en nitrates n'évoluent plus. Ce temps de contact est de une semaine pour les résines et de 24h pour la cellulose greffée selon l'invention.

La quantité de substances humiques fixées par les résines a été en moyenne de 10mg/g, les résultats variant de 9 à 11 mg/g selon le type de résine.Par rapport à la capacité totale de résine mise en jeu lors de l'essai, le rendement est de l'ordre de 3%. Comparativement la quantité de substances humiques fixées par la cellulose greffée a été de 90mg/g.

Avec une cellulose greffée ayant une capacité de 0,6méq/g mise en oeuvre dans les mêmes conditions, la quantité de substances humiques fixées a été de 180mg/g,

Des essais complémentaires ont été réalisés avec la cellulose greffée et avec une eau comportant d'autres types d'anions et de cations que l'on trouve couramment dans les eaux naturelles chargées, à savoir sulfate, chlorure, phosphates, sodium, calcium, et aux concentrations correspondantes. La chute de rendement de fixation des substances humiques n'est que de 15% au maximum par rapport aux résultats précédents.

Il est à noter que la cellulose greffée fixe avec un rendement quasiment de 100% les ions nitrates. Cependant, en fonction de la capacité d'échange disponible, les substances humiques déplacent les nitrates déjà fixés, du fait qu'elles ont une plus grande affinité vis-à-vis des fonctions ammonium quaternaire.

Des essais en dynamique ont été réalisés dans un module, contenant 5g de cellulose greffée selon l'invention. De l'eau à 50mg/l de substances humiques a traversé le matelas de cellulose greffée avec un débit de 5l/mn. On a appliqué à l'intérieur du module une pression de 0,5 bar. La quantité de substances humiques retenue par gramme de cellulose greffée a été de 100mg soit 75% de la teneur totale de l'eau traversée en substances humiques. La cellulose a été régénérée par une solution de chlorure de sodium, puis réutilisée; les résultats obtenus sont restés sensiblement identiques.

## Revendications

1. Utilisation de celluloses greffées, sous forme fibreuse, comportant des fonctions ammonium quaternaire pour l'élimination des substances humiques et des nitrates contenus dans les eaux naturelles ou industrielles.

2. Utilisation selon la revendication 1 caractérisée en ce que la cellulose greffée se présente sous forme de papier, de non-tissé, de bourre, de fil ou de tissu.

3. Utilisation selon la revendication 1 caractérisée en ce que la cellulose greffée est obtenue par greffage radicalaire de la cellulose à l'aide d'un monomère insaturé à fonction ammonium quaternaire.

4. Utilisation selon la revendication 3 caractérisée en ce que le monomère insaturé est le méthacrylate de diéthyl-amino-éthyl quaternisé.

5. Utilisation selon la revendication 1 caractérisé en ce que la capacité d'échange d'ions de la cellulose greffée est supérieure ou égale à 0,2méq/g.

6. Utilisation selon la revendication 1 pour la production d'eau potable à partir d'eaux naturelles.

## Patentansprüche

1. Verwendung von Pfropfzellulosen in Faserform mit Quaternärammoniumgruppen zur Entfernung der in den natürlichen oder industriellen Wässern enthaltenen Humusstoffe und Nitrate.

2. Verwendung nach Anspruch 1, dadurch gekennzeichnet, daß die Pfropfzellulose in Papier-, ungewebter, Wollhaar-, Faden- oder Gewebeform vorliegt.

3. Verwendung nach Anspruch 1, dadurch gekennzeichnet, daß die Pfropfzellulose durch Radikalpfropfung der Zellulose mit Hilfe eines ungesättigten Monomers mit Quaternärammoniumgruppe erhalten wird.

4. Verwendung nach Anspruch 3, dadurch gekennzeichnet, daß das ungesättigte Monomer das Methacrylat von quaternisiertem Diethylaminoethyl ist.

5. Verwendung nach Anspruch 1, dadurch gekennzeichnet, daß die Ionenaustauschkapazität der Pfropfzellulose über oder gleich 0,2 mäq (méq)/g ist.

6. Verwendung nach Anspruch 1 zur Herstellung von Trinkwasser aus natürlichen Gewässern.

## Claims

1. Use of grafted celluloses, infibrous form, comprising quaternary ammonium functions, for eliminating humic substances and nitrates contained in natural or industrial water.

2. Use according to claim 1, characterized in that the grafted cellulose is in the form of paper, non-woven web, flock, yarn or woven fabric.

3. Use according to claim 1, characterized in that the grafted cellulose is obtained by radical grafting of the cellulose with the aid of a non-saturated monomer with quaternary ammonium function.

4. Use according to claim 3, characterized in that the non-saturated monomer is the quaternized diethylamino-ethyl methacrylate.

5. Use according to claim 1, characterized in that the ion exchange capacity of the grafted cellulose is greater than or equal to 0.2 meq/g.

6. Use according to claim 1 for producing drinking water from natural water.
